# EUROPEAN PATENT SPECIFICATION

(11) **EP 4 140 846 B1**
(45) Date of publication and mention of the grant of the patent: **10.07.2024**
(21) Application number: 22190653.0
(22) Date of filing: 16.08.2022
(51) Int. Cl.: B60W 60/00, B60W 40/04

(54) **PLANNING SYSTEM FOR AUTONOMOUSLY NAVIGATING AROUND LANE-SHARING ROAD AGENTS**
PLANUNGSSYSTEM ZUR AUTONOMEN NAVIGATION IN DER UMGEBUNG VON STRASSENAGENTEN MIT GEMEINSAMER FAHRSPUR
SYSTÈME DE PLANIFICATION POUR NAVIGUER DE MANIÈRE AUTONOME AUTOUR D'AGENTS ROUTIERS PARTAGEANT UNE VOIE

(30) Priority: 24.08.2021 US 202163236541 P; 26.10.2021 US 202117511053
(43) Date of publication of application: 01.03.2023
(73) Proprietor: WAYMO LLC, Mountain View, CA 94043 (US)
(72) Inventor: Russell, Jared Stephen, Mountain View, 94043 (US); Pandya, Tirthkumar Nilaykumar, Mountain View, 94043 (US); Deng, Eric, Mountain View, 94043 (US); Shah, Chinmayee, Mountain View, 94043 (US); Lalonde, Geoffrey, Mountain View, 94043 (US); Hobbs Dorsey, Anne, Mountain View, 94043 (US)
(74) Representative: Derry, Paul Stefan

(56) References cited:
- EP-A1- 3 647 735
- US-A1- 2019 121 362
- US-A1- 2020 398 894

## Description

### BACKGROUND

Autonomous vehicles, such as vehicles that do not require a human driver, can be used to aid in the transport of passengers or items from one location to another. Such vehicles may operate in a fully autonomous driving mode where passengers may provide some initial input, such as a destination, and the vehicle maneuvers itself to that destination. Thus, such vehicles may be largely dependent on systems that are capable of determining the location of the autonomous vehicle at any given time, as well as detecting and identifying objects external to the vehicle, such as other vehicles, stop lights, pedestrians, etc.

Data from one or more of these systems may be used to detect objects and their respective characteristics (position, shape, heading, speed, etc.). These characteristics can be used to predict trajectories of other objects. These trajectories may define what an object is likely to do for some brief period into the future. These trajectories can then be used to control the vehicle in order to avoid these objects. Thus, detection, identification, and prediction are critical functions for the safe operation of autonomous vehicles.

EP 3 647 735 A1 discloses techniques for adjusting lateral clearance for a vehicle using a multi-dimensional envelope. A trajectory is generated for the vehicle. A multi-dimensional envelope is generated indicating a drivable region for the vehicle and containing the trajectory. One or more objects are identified located along or adjacent to the trajectory. At least one dimension of the generated multi-dimensional envelope is adjusted to adjust a lateral clearance between the vehicle and the identified one or more objects. A control module of the vehicle navigates the vehicle along the multi-dimensional envelope.

US 2019/121362 A1 discloses a method for controlling a vehicle in an autonomous driving mode. In one instance, sensor data identifying an object in an environment of the vehicle may be received. A first path of a first trajectory where the vehicle will pass the object may be determined. A function is used to determining a first maximum speed of the vehicle based on a predetermined minimum lateral clearance between the object and the vehicle. The first maximum speed may be used to determine whether an actual lateral clearance between the object and the vehicle will meet the predetermined minimum lateral clearance. The determination of whether the actual lateral clearance will meet the predetermined minimum lateral clearance may be used to generate a first speed plan for the first trajectory. The vehicle may be controlled in the autonomous driving mode according to the first trajectory including the first speed plan and the first path.

US 2020/398894 A1 discloses techniques for generating trajectories and drivable areas for navigating a vehicle in an environment.

The techniques can include receiving a reference trajectory representing an initial trajectory for a vehicle, such as an autonomous vehicle, to traverse the environment in a first drivable area. An object within a distance threshold can be detected in the environment and a second drivable area can be determined. Further, the techniques can include determining a target trajectory based at least in part on the reference trajectory and/or the second drivable area which can provide a region for the object to traverse the environment, and controlling the autonomous vehicle to traverse the environment based at least in part on the target trajectory.

### BRIEF SUMMARY

The matter for protection is defined by the claims.

### BRIEF DESCRIPTION OF THE DRAWINGS

FIGURE 1 is a functional diagram of an example vehicle in accordance with aspects of the invention.
FIGURE 2 is an example map information in accordance with aspects of the invention.
FIGURE 3 is an example representative view of a vehicle in accordance with aspects of the invention.
FIGURE 4 is a flow diagram of an example method in accordance with aspects of the invention.
FIGURE 5 shows an example scenario in accordance with aspects of the invention.

### DETAILED DESCRIPTION

### OVERVIEW

The invention relates to a planning system for an autonomous vehicle that accounts for lane-sharing road agents, such as cyclists. For scenarios where the autonomous vehicle shares lateral space with a road agent, a one-size fits all solution may cause the autonomous vehicle to slow more than needed and make less progress along a route, or may not create the best or safest outcomes for every possible scenario. Instead, the behavior of detected road agents may be used in addition to safety parameters/requirements to adapt an amount of lateral spacing needed to provide comfortable forward progress in the autonomous vehicle for a particular scenario.

The vehicle's computing devices may detect a road agent and road agent behavior over time. The vehicle's computing devices may initiate analysis of the road agent behavior based on the detected characteristics and behavior. For instance, the analysis may be initiated when the road agent is predicted to interact with the autonomous vehicle. The analysis of the road agent behavior is for estimating a spacing profile of the road agent. The spacing profile includes a lateral gap preference and one or more predicted behaviors of the road agent related to changes in lateral spacing. The spacing profile further includes a predictability score for the road agent, which is based on how much behavior to-date has matched previously predicted behavior and optionally the predictability of environmental factors.

Based on the estimated spacing profile, the vehicle's computing devices may determine autonomous vehicle maneuver. To perform the determination, the vehicle's computing devices may update one or more constraints based on the spacing profile. The one or more constraints may then be used in the determination of one or more components of a vehicle maneuver, such as speed, path, or route. The vehicle's computing devices may then execute the determined vehicle maneuver by controlling the one or more operational systems of the autonomous vehicle accordingly.

The technology herein may allow for a smoother and safer trip in an autonomous vehicle for a passenger. In particular, more forward progress in the autonomous vehicle may be made than without the navigation system described above. The technology may also minimize unnecessary overreactions and underreactions by the autonomous vehicle to smaller lateral gaps with which cyclists, scooters, motorcycles, pedestrians, runners, and other road agents are comfortable while simultaneously maintaining required levels of safety and compliance.

### EXAMPLE SYSTEMS

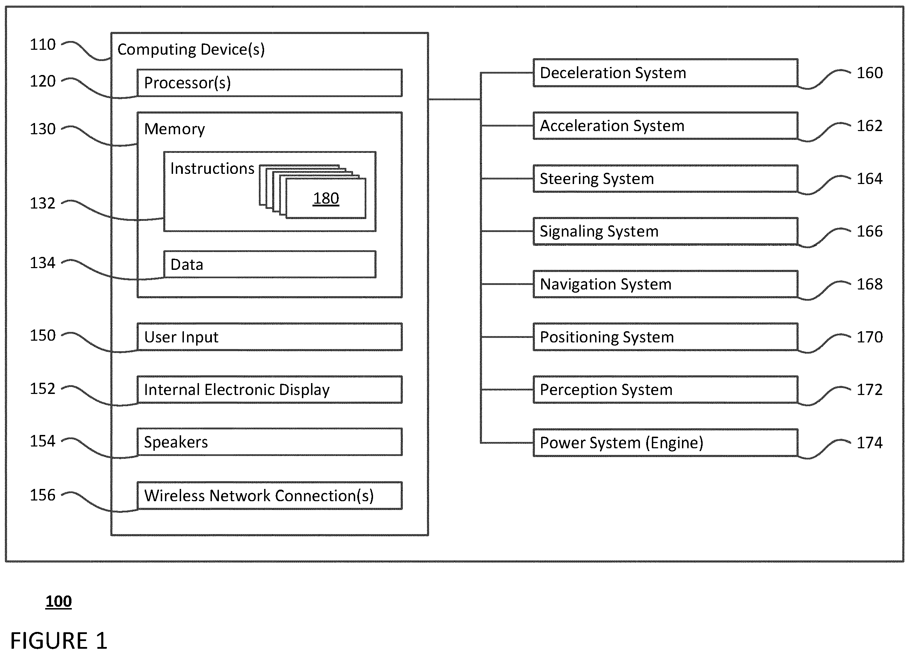

As shown in FIGURE 1, a vehicle 100 in accordance with one aspect of the invention includes various components. While certain aspects of the disclosure are particularly useful in connection with specific types of vehicles, the vehicle may be any type of vehicle including, but not limited to, cars, trucks, motorcycles, buses, recreational vehicles, etc. The vehicle may have one or more computing devices, such as computing devices 110 including one or more processors 120, memory 130 and other components typically present in general purpose computing devices.

The one or more processor 120 may be any conventional processor, such as commercially available CPUs. Alternatively, the one or more processors may be a dedicated device such as an ASIC or other hardware-based processor.

The memory 130 stores information accessible by the one or more processors 120, including instructions 132 and data 134 that may be executed or otherwise used by the processor 120. The memory 130 may be of any type capable of storing information accessible by the processor, including a computing device-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

Memory 130 may store various models used by computing device 110 to make determinations on how to control vehicle 100. For example, memory 130 may store one or more object recognition models for identifying road users and objects detected from sensor data. For another example, memory 130 may store one or more behavior models for providing the probability of one or more actions being taken by a detected object. For another example, memory 130 may store one or more speed planning models for determining speed profiles for vehicle 100 based on map information and predicted trajectories of other road users detected by sensor data.

The instructions 132 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. In some implementations, the instructions 132 may include a plurality of modules 180, where each module may include one or more routines of a program that operates independent from other modules. Functions, methods and routines of the instructions are explained in more detail below.

The data 134 may be retrieved, stored or modified by processor 120 in accordance with the instructions 132. For instance, although the claimed subject matter is not limited by any particular data structure, the data may be stored in computing device registers, in a relational database as a table having a plurality of different fields and records, XML documents or flat files. The data may also be formatted in any computing device-readable format.

Although FIGURE 1 functionally illustrates the processor, memory, and other elements of computing devices 110 as being within the same block, it will be understood by those of ordinary skill in the art that the processor, computing device, or memory may actually include multiple processors, computing devices, or memories that may or may not be stored within the same physical housing. For example, memory may be a hard drive or other storage media located in a housing different from that of computing devices 110. Accordingly, references to a processor or computing device will be understood to include references to a collection of processors or computing devices or memories that may or may not operate in parallel.

Computing devices 110 may include all of the components normally used in connection with a computing device such as the processor and memory described above as well as a user input 150 (e.g., a mouse, keyboard, touch screen and/or microphone) and various electronic displays (e.g., a monitor having a screen or any other electrical device that is operable to display information). In this example, the vehicle includes an internal electronic display 152 as well as one or more speakers 154 to provide information or audio visual experiences. In this regard, internal electronic display 152 may be located within a cabin of vehicle 100 and may be used by computing devices 110 to provide information to passengers within the vehicle 100.

Computing devices 110 may also include one or more wireless network connections 156 to facilitate communication with other computing devices, such as the client computing devices and server computing devices described in detail below. The wireless network connections may include short range communication protocols such as Bluetooth, Bluetooth low energy (LE), cellular connections, as well as various configurations and protocols including the Internet, World Wide Web, intranets, virtual private networks, wide area networks, local networks, private networks using communication protocols proprietary to one or more companies, Ethernet, Wi-Fi and HTTP, and various combinations of the foregoing.

In one example, computing devices 110 may be an autonomous driving computing system incorporated into vehicle 100. The autonomous driving computing system may be capable of communicating with various components of the vehicle in order to maneuver vehicle 100 in a fully autonomous driving mode and/or semi-autonomous driving mode. For example, returning to FIGURE 1, computing devices 110 may be in communication with various operational systems of vehicle 100, such as deceleration system 160, acceleration system 162, steering system 164, signaling system 166, navigation system 168, positioning system 170, perception system 172, and power system 174 (for instance, a gasoline or diesel powered motor or electric engine) in order to control the movement, speed, etc. of vehicle 100 in accordance with the instructions 132 of memory 130. Again, although these systems are shown as external to computing devices 110, in actuality, these systems may also be incorporated into computing devices 110, again as an autonomous driving computing system for controlling vehicle 100.

As an example, computing devices 110 may interact with deceleration system 160 and acceleration system 162 in order to control the speed of the vehicle. Similarly, steering system 164 may be used by computing devices 110 in order to control the direction of vehicle 100. For example, if vehicle 100 is configured for use on a road, such as a car or truck, the steering system may include components to control the angle of wheels to turn the vehicle. Signaling system 166 may be used by computing devices 110 in order to signal the vehicle's intent to other drivers or vehicles, for example, by lighting turn signals or brake lights when needed.

Navigation system 168 may be used by computing devices 110 in order to determine and follow a route to a location. For instance, the navigation system may function to generate routes between locations and plan trajectories for the vehicle in order to follow this route. Although depicted as a single system, the navigation system may actually comprise multiple systems to achieve the aforementioned routing and planning functions. In this regard, the navigation system 168 and/or data 134 may store detailed map information, e.g., highly detailed maps identifying the shape and elevation of roadways, lane lines, intersections, crosswalks, speed limits, traffic signals, buildings, signs, real time traffic information, vegetation, or other such objects and information.

In other words, this detailed map information may define the geometry of the vehicle's expected environment including roadways as well as speed restrictions (legal speed limits) for those roadways. Specifically, the map information may include a roadgraph defining the geometry of roadway features such as lanes, medians, curbs, crosswalks, etc. As an example, the roadgraph may include a plurality of points and/or line segments with connections to one another defining the geometry (e.g. size, shape, dimensions, and locations) of the aforementioned roadway features. The roadgraph may also include information which identifies how a vehicle is expected to travel in a given roadway, including direction (i.e., lawful direction of traffic in each lane), lane position, speed, etc. For instance, this map information may include information regarding traffic controls, such as traffic signal lights, stop signs, yield signs, etc. This information, in conjunction with real time information received from the perception system 172, can be used by the computing devices 110 to determine which directions of traffic are oncoming traffic lanes and/or have the right of way at a given location.

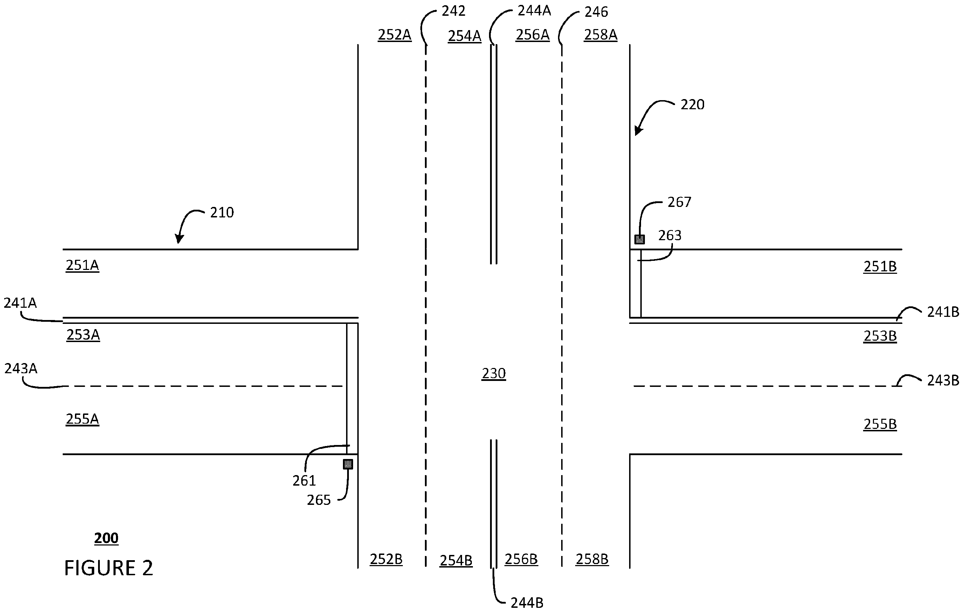

FIGURE 2 is an example of map information 200 for a section of roadway including intersection 230. In this example, map information 200 depicts a portion of the map information that includes information identifying the shape, location, and other characteristics of various features. For example, map information 200 includes road 210 and road 220 intersecting at intersection 230. Map information 200 includes lane markers or lane lines 241A and 243A of road 210 on a first side of intersection 230, lane lines 241B and 243B of road 210 on a second side of intersection 230 opposite the first side. In addition, map information includes lane lines 242 and 246 of road 220 passing through intersection 230 from a third side to a fourth side opposite the third side, lane line 244A of road 220 on the third side of intersection 230, and lane line 244B of road 220 on the fourth side of intersection 230. The lane lines may be different types of lane lines, such as double lane lines 241A, 241B, 244A, and 244B, and broken lane lines 242, 243A, 243B, and 246. The lane lines may also define various lanes, such as lanes 251, 252, 253, 254, 255, 256, and 258.

Lane portions 251A, 253A, and 255A of road 210 are on a first side of intersection 230, and lane portions 251B, 253B, and 255B of road 210 are on a second side of intersection 230 opposite the first side. Lane portions 252A, 254A, 256A, and 258A of road 220 are on a third side of intersection 230, and lane portions 252B, 254B, 256B, and 258B of road 220 are on a fourth side of intersection 230 opposite the third side. The lanes may be explicitly identified in the map information 200 as shown, or may be implied by the width of a road. Map information 200 may also identify bicycle lanes. As shown, map information 200 may also include stop lines 261 and 263 for road 210. Stop line 261 may be associated with a stop sign 265, and stop line 263 may be associated with a stop sign 267.

In addition to these features, the map information 200 may also include information that identifies the direction of traffic and speed limits for each lane as well as information that allows the computing device 110 to determine whether the vehicle has the right of way to complete a particular maneuver (e.g., to complete a turn or cross a lane of traffic or intersection). Map information 200 may further include information on traffic signs, such as traffic lights, stop signs, one-way sign, no-turn sign, etc. Map information 200 may include information about other environmental features such as curbs, buildings, parking lots, driveways, waterways, vegetation, etc.

Although the detailed map information is depicted herein as an image-based map, the map information need not be entirely image based (for example, raster). For example, the detailed map information may include one or more roadgraphs or graph networks of information such as roads, lanes, intersections, and the connections between these features. Each feature may be stored as graph data and may be associated with information such as a geographic location and whether or not it is linked to other related features, for example, a stop sign may be linked to a road and an intersection, etc. In some examples, the associated data may include grid-based indices of a roadgraph to allow for efficient lookup of certain roadgraph features.

The perception system 172 also includes one or more components for detecting objects external to the vehicle such as other road agents, obstacles in the roadway, traffic signals, signs, trees, etc. The other road agents may include cyclists, scooters, motorcycles, pedestrians, or runners. For example, the perception system 172 may include one or more imaging sensors including visible-light cameras, thermal imaging systems, laser and radiofrequency detection systems (e.g., LIDAR, RADAR, etc.,), sonar devices, microphones, and/or any other detection devices that record data which may be processed by computing devices 110.

When detecting objects, the one or more imaging sensors of the perception system 172 may detect their characteristics and behaviors, such as location (longitudinal and latitudinal distance relative to the vehicle), orientation, size, shape, type, direction/heading, trajectory, lateral movement, speed of movement, acceleration, etc. The raw data from the sensors and/or the aforementioned characteristics can be quantified or arranged into a descriptive function or vector and sent for further processing to the computing devices 110. As an example, computing devices 110 may use the positioning system 170 to determine the vehicle's location and perception system 172 to detect and respond to objects when needed to follow a route or reach a destination safely.

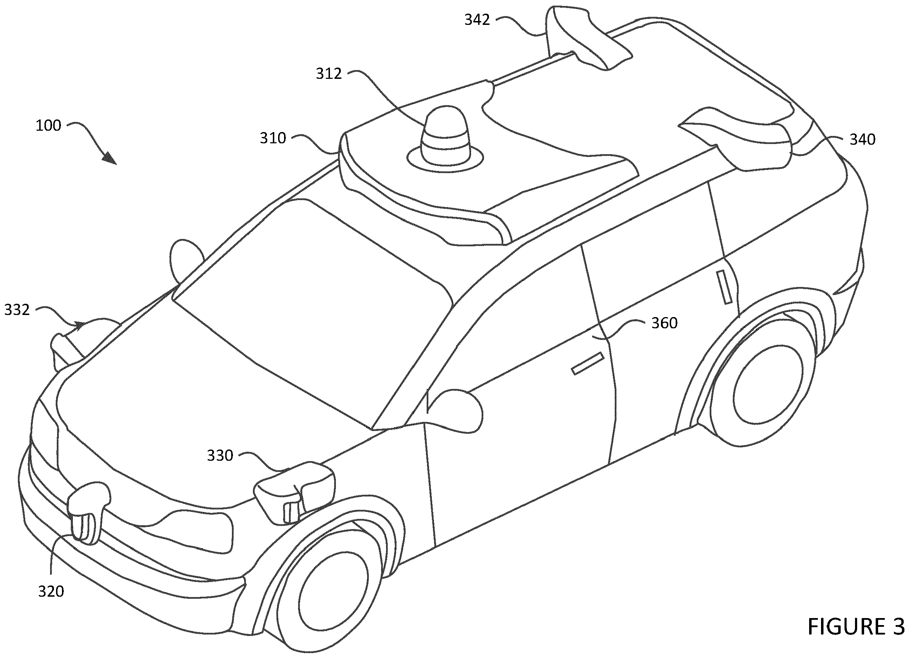

FIGURE 3 is an example external view of vehicle 100. In this example, roof-top housing 310 and dome housing 312 may include a LIDAR sensor as well as various cameras and radar units. In addition, housing 320 located at the front end of vehicle 100 and housings 330, 332 on the driver's and passenger's sides of the vehicle may each store a LIDAR sensor or system. For example, housing 330 is located in front of driver door 360. Vehicle 100 also includes housings 340, 342 for radar units and/or cameras also located on the roof of vehicle 100. Additional radar units and cameras (not shown) may be located at the front and rear ends of vehicle 100 and/or on other positions along the roof or roof-top housing 310. Vehicle 100 also includes many features of a typical passenger vehicle such as doors, wheels, windows, etc.

### EXAMPLE METHODS

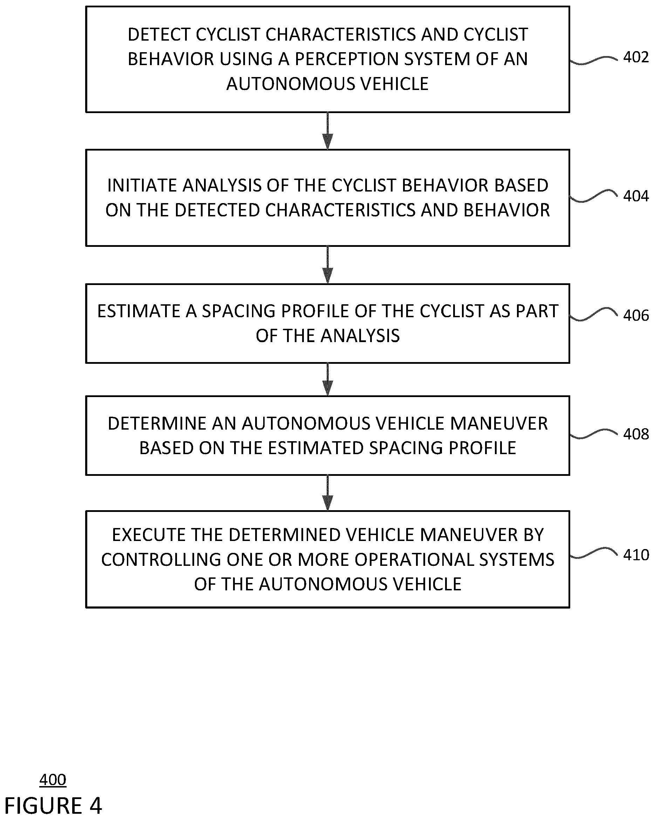

In addition to the operations described above and illustrated in the figures, various operations will now be described. The computing device 110 may detect a road agent, such as a cyclist, in the vehicle's environment and adjust one or more systems of the autonomous vehicle 100 according to the detected road agent. For example, in FIGURE 4, flow diagram 400 is shown for a method of performing the adjustment. It should be understood that the following blocks or operations do not have to be performed in the precise order described below. Rather, various steps can be handled in a different order or simultaneously, and steps may also be added or omitted.

At block 402, the vehicle's computing devices 110 may detect a road agent and road agent behavior using the perception system 172. A vicinity of the vehicle 100 may be defined by ranges of the sensors and other detection systems of the perception system 172 of the vehicle 100. Sensor data obtained from the perception system 172 may include object data defining a cyclist 510. The vehicle's computing devices 110 may identify the road agent using the object data along with the characteristics of the road agent. For example, the road agent may be detected having a given location, pose, orientation, dimensions/size, shape, speed, direction/heading, trajectory, lateral movement, acceleration, or other positional characteristics. The characteristics may also include physical characteristics, such as an estimated age, size, hand signals, light signals, type of apparel, type of bicycle, etc. For example, certain age groups, such as children or elderly, may be associated with greater lateral gap preferences and slower reaction times. Certain vehicles, such as road bikes, may be associated with smaller lateral gap preferences and higher speeds.

In addition to detecting the rail agent, the vehicle's computing devices 110 may also detect a plurality of objects in the vehicle's vicinity. For instance, sensor data from the perception system 172 may also include characteristics of each object, such as the object's size, shape, speed, orientation, direction, etc. The plurality of objects may include moving and/or stationary objects. In particular, the plurality of objects may include other road users, such as vehicles, bicycles, or pedestrians, may include other types of obstructions, such as buildings, posts, trees, or construction tools, or may include traffic features, such as lights, signs, lane lines, curbs, or rail tracks.

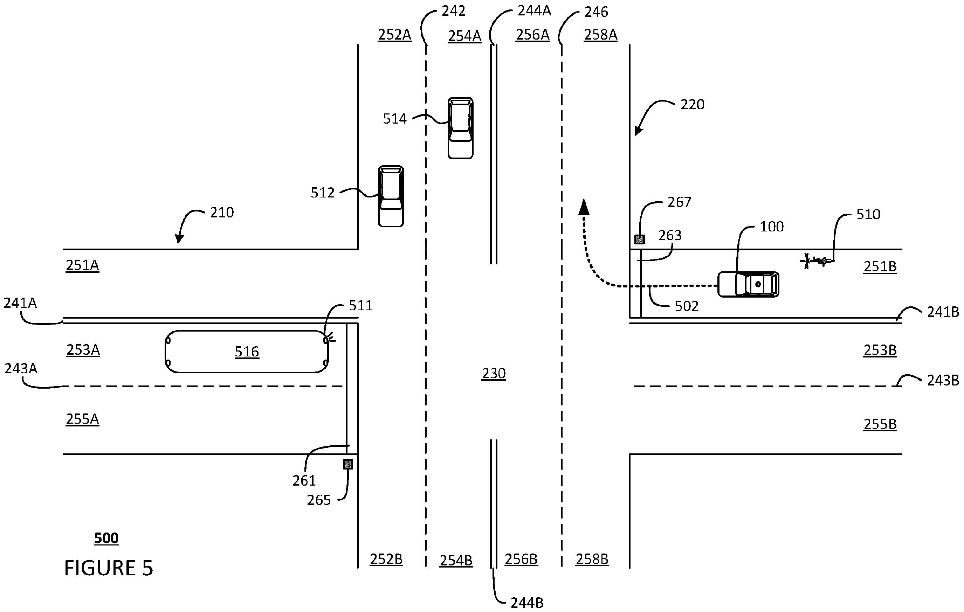

In scenario 500 depicted in FIGURE 5, the vehicle 100 may be in lane portion 251B of road 210 by intersection 230, approaching at stop line 263. The vehicle 100 may have a planned maneuver 502 to turn right at the intersection 230. The planned maneuver 502 of the vehicle, illustrated as a dotted line, includes turning right from lane portion 251B into lane portion 258A though the intersection 230. From the position of the vehicle 100, the vehicle's computing devices 110 may use the perception system 172 to detect cyclist 510, vehicles 512, 514, bus 516, lane lines 241A, 241B, 243A, 243B, 242, 244A, 244B, 246, stop lines 261, 263, stop signs 265, 267, and characteristics of the detected objects and features. Characteristics of the detected objects and features may include type of lane lines, geometry of lane lines and rail tracks, location and pose of vehicles (vehicle 512 in lane portion 252A, vehicle 514 in lane portion 254A, bus 516 in lane portion 253A proximate to stop line 261), trajectory of vehicles (towards intersection 230), shape of signs (octagon), and location and orientation of signs. The vehicle's computing devices 110 may also detect a blinking light on the bus 516, particularly the left turn blinker 511. The characteristics of the cyclist 510 may include at least location (relative to vehicle, such as behind and to the right of vehicle 100, and relative to road geometry, such as in lane portion 251B proximate to the curb) and direction of travel (towards intersection 230 from lane portion 251B).

At block 404, the vehicle's computing devices 110 may initiate analysis of the road agent behavior based on the detected characteristics and behavior. For example, the analysis may be initiated when the road agent is predicted to interact with the autonomous vehicle. Interacting with the autonomous vehicle means factoring into the autonomous vehicle planning process or otherwise affecting the operation of the autonomous vehicle. The prediction may include that the road agent is projected to overlap laterally with or overtake the autonomous vehicle, a plurality of characteristics of a scenario that are associated with potential interaction with the autonomous vehicle are detected by the vehicle's computing devices, and/or a set of heuristics are satisfied by detected characteristics of the scenario. The prediction may also be made based on basic requirements, rules, or customs for road agents; for example, the prediction may take into account a lateral gap that at minimum satisfies the local regulatory rules and the operational design domain. When the road agent is predicted to interact with the autonomous vehicle, the analysis of the road agent behavior (which will be described below) may be initiated. The prediction may also include a threshold likelihood, such as a percentage or a score, for the interaction of the road agent with the autonomous vehicle in order to trigger the initiation of the analysis.

In some examples, initiating analysis may include determining a future trajectory of the road agent based on a location of the road agent in relation to the autonomous vehicle, past or current heading of the road agent, or past or current speed of the road agent. For example, the analysis may be initiated when the future trajectory of the road agent overtakes the autonomous vehicle. Overtaking the autonomous vehicle may be characterized by the road agent traveling in a same direction/heading as the autonomous vehicle for a period of time, having a higher speed than the autonomous vehicle, and/or having an increasing amount of lateral overlap with the autonomous vehicle. In the scenario shown in FIGURE 5, the characteristics of the cyclist 510 detected by the perception system 172 include being currently located behind the vehicle 100, a same direction/heading as the autonomous vehicle 100 for a threshold amount of time, and a speed greater than the autonomous vehicle for the threshold amount of time. Based on these characteristics, the vehicle's computing devices 110 may determine that the cyclist 510 is probably performing an overtake maneuver to pass the vehicle 100, and that the cyclist 510 has a threshold likelihood of interacting with the vehicle 100. As a result, the vehicle's computing devices 110 may initiate analysis of cyclist 510.

In other examples, initiating analysis may include using a machine learning model for predicting that the road agent will interact with the autonomous vehicle.

Once initiated, the analysis may be iterated continually until there is no longer potential interaction between the road agent and the autonomous vehicle. For example, there is no longer potential interaction when the road agent is outside a maximum distance from the autonomous vehicle, turned onto a different street than the autonomous vehicle, or has parked.

The analysis of the road agent behavior is for estimating a spacing profile of the road agent. The spacing profile includes a lateral gap preference and one or more predicted behaviors of the road agent related to changes in lateral spacing. The spacing profile further includes a predictability score for the road agent, which is based on how much behavior to-date has matched previously predicted behavior and optionally the predictability of environmental factors.

At block 406, the vehicle's computing devices 110 may estimate a spacing profile of the road agent as part of the analysis. The estimation of the spacing profile may be based on an existing lateral gap between autonomous vehicle and road agent or changes to the lateral gap over time. The existing lateral gap and changes to the lateral gap may be determined using detected locations of the road agent. For example, the cyclist 510 in FIGURE 5 is detected as having maintained approximately a first lateral gap in the past few seconds or iterations. The lateral gap preference for the cyclist 510 may be set, at least initially, as the first lateral gap, and a predicted behavior of the cyclist may be that the cyclist will maintain the first lateral gap under most circumstances. On the other hand, if the cyclist has consistently reduced the lateral gap from the first lateral gap in the past few seconds or iterations, then it may be determined that the lateral gap preference is smaller than the first lateral gap, and a predicted behavior of the cyclist may be continued reduction of the lateral gap until a preferred lateral gap is reached.

Other factors for estimating the spacing profile include environment context, road agent gaze/awareness, and road agent characteristics. Environment context may be extracted from map information and may include lane width (since the narrower the lane the more comfortable the road agent might be with a smaller lateral gap), adjacent lane types or boundary types (since a cyclist in or next to a bike lane may be able to react more to the autonomous vehicle nudging in laterally), or speed limit (a basis on which to determine likely speeds of the road agent). Other environmental contexts may be detected using the perception system; for example, traffic density and traffic speed. In the scenario in FIGURE 5, the cyclist 510 is traveling along a trajectory that passes between the vehicle 100 and a curb. Based on the location of the curb, the lateral gap preference in the spacing profile may be less than the distance between the vehicle 100 and the curb, and the predicted behavior in the spacing profile may include a likelihood of the cyclist 510 reacting to a reduction of the distance between the vehicle 100 and the curb and one or more likely reactions.

Road agent gaze may be detected using the perception system to track a direction and focus of eyes of a human associated with the road agent, and may be used to determine road agent awareness of the autonomous vehicle. Road agent awareness may be defined by how long or often a road agent has looked at the autonomous vehicle within the last few seconds or iterations. In the scenario in FIGURE 5, a gaze of the cyclist 510 is detected as being directed toward the autonomous vehicle 100 for a first threshold amount of time, which indicates that the cyclist 510 is aware of the autonomous vehicle. The spacing profile of the cyclist 510 may therefore include a higher likelihood for reduction in the lateral gap and/or the lateral gap preference, and the predicted behavior of the cyclist 510 may include quicker reaction times to the autonomous vehicle 100. When the cyclist gaze is toward the autonomous vehicle for less than the first threshold amount of time, it may be determined that the cyclist is not fully aware of the autonomous vehicle, and the predicted behaviors of the cyclist may be slower reactions and more overreactions to movements by the autonomous vehicle. When the cyclist gaze is toward the autonomous vehicle for over a second threshold amount of time greater than the first, it may be determined that the cyclist is hyperaware of the autonomous vehicle, and the predicted behaviors of the cyclist may be more sensitive to movements by the autonomous vehicle.

Generalizations of preferences based on one or more physical characteristics of the road agent may also be used to determine the lateral gap preference and the predicted behaviors.

Particularly with regards to predicted behaviors, they may include whether the road agent is trying to overtake or cut in front of the autonomous vehicle, which can be based on a difference in speed between the road agent and the autonomous vehicle. Namely, if the autonomous vehicle is slower than the road agent, a predicted behavior may include an overtake maneuver, which may be associated with greater reactions and/or smaller lateral gap preference. As described above, the cyclist 510 in FIGURE 5 may be determined as performing an overtake of the autonomous vehicle 100 based on the detected heading and speed of the cyclist 510 in relation to the heading and speed of the autonomous vehicle 100. The predicted behavior of the cyclist 510 may therefore include a likely future reduction of lateral gap preference when the cyclist 510 passes between the autonomous vehicle 100 and the curb.

Predicted behaviors may be projected from detected behavior. Also, predicted behaviors may be based on predicted autonomous vehicle maneuvers and on probable reactions to the maneuvers. For example, if, in order to maintain a preferred or default lateral gap for a current trajectory of the road agent, it may be extrapolated that the autonomous vehicle may have to nudge into an oncoming lane with traffic. The system may assume that the road agent is aware that the vehicle nudging into the oncoming lane with traffic is unlikely, and therefore determine that the road agent would be comfortable with a smaller lateral gap with the autonomous vehicle. In the scenario in FIGURE 5, the predicted behavior of the cyclist 510 may be determined also based on the fact that the autonomous vehicle 100 is unlikely to nudge into lane 253 in response to the overtake maneuver. In another example, it may be extrapolated that the autonomous vehicle may have to nudge around a double-parked vehicle, and the system may determine that the cyclist is likely unaware of the double-parked vehicle. Accordingly, the system may determine that a larger lateral gap is needed. In other cases when the autonomous vehicle behavior is predictable and likely legible to the cyclist, smaller lateral gaps may be used. Predicted autonomous vehicle maneuvers may take into account the lateral gap between the autonomous vehicle and other vehicles in the environment.

At block 408, the vehicle's computing devices 110 may determine an autonomous vehicle maneuver based on the estimated spacing profile. To perform the determination, the vehicle's computing devices may update one or more constraints based on the spacing profile. For example, constraints, such as those related to a vehicle's lateral gap preference, may be added, moved, altered/tuned, or removed. Some constraints may include a permeability feature that may be updated. The constraints may be updated so that the effective vehicle's lateral gap preference may be updated to more closely match the road agent's lateral gap preference, which is determined from real world data in a same or similar manner as described above and may be updated in a same or similar manner in real time. The permeability of a speed constraint may be based on the predictability score of the road agent or of a particular road agent behavior. In particular, a higher permeability may be set originally for a merge constraint based on the road agent behavior because, at the beginning of the overtake maneuver, there is a lower predictability as to when the overtake by the road agent will occur. The merge constraint may be a predicted location for the autonomous vehicle to yield to the road agent. This can allow for the autonomous vehicle to slow down less initially and make more forward progress. In addition, based on a higher predictability score, there may be fewer or more tailored constraints. Based on a lower predictability score, there may be more or more generalized constraints. In some implementations, the one or more constraints may also be updated based on a predictability score of the autonomous vehicle. The vehicle's predictability score may be based on confidence levels with respect to the reactions of the autonomous vehicle to other road objects or road agents, the detection system of the autonomous vehicle, or other factors for maneuvering the autonomous vehicle. The constraints may further change as the road agent trajectory and behavior indicate that the overtake is imminent.

The one or more constraints may then be used in the determination of one or more components of a vehicle maneuver, such as speed, path, or route. In the case of lower predictability score of the road agent or the autonomous vehicle, the vehicle's computing devices may determine a slower speed or more cautious maneuvers according to the one or more constraints. In the case of higher predictability score of the road agent or the autonomous vehicle, the vehicle's computing devices may determine a specific path that takes into account the likely route of the road agent and efficiently navigates through the route. Particularly in the case of a high predictability for an imminent overtake maneuver by the road agent, the vehicle's computing devices may determine a slower speed to prepare to yield to the road agent, as needed. In some implementations, the determination of one or more components includes selecting a component setting that better satisfies the one or more constraints.

In some cases, the resulting one or more components may also be used in other calculations for a next iteration of the analysis, such as an overlap calculation or lateral gap calculation. For instance, the road agent's and/or vehicle's lateral gap preference may be used to update a projected trajectory of the road agent, and in turn update the vehicle maneuver in response to the updated projected trajectory.

System-wise, a first module may be configured for the estimation of the spacing profile, and a separate second module may be configured for the determination of the vehicle maneuver. The separation of the two functions allows for components for one module to be designed and shipped separate from the other. As such, the second module may be designed to determine merge constraints with or without a spacing profile, but treat determine more conservative constraints in the absence of a spacing profile received from the first module.

At block 410, the vehicle's computing devices 110 may execute the determined vehicle maneuver by controlling one or more operational systems of the autonomous vehicle accordingly. The vehicle's computing devices 110 may send instructions to one or more operational systems of the vehicle 100, including the deceleration system 160, acceleration system 162, and steering system 164. In some implementations, a third module separate from the first and second modules may be configured to receive control instructions from the second module and/or execute the control instructions.

In some alternative implementations, determining the autonomous vehicle maneuver may include determining how conservative the autonomous vehicle should be while sharing lateral space with the road agent based on the estimated spacing profile. Greater conservativeness may be determined associated with a low predictability, with high certainty of more aggressive road agent behavior (such a cut-in maneuver), or with a high complexity of a vehicle maneuver based on world context. This conservativeness may be a separate determination, such as a conservativeness level or score, or may be intrinsically part of the determination for the autonomous vehicle maneuver.

In further implementations, a same or similar method may be applied to other types of road agents than road agents. In some cases, spacing profiles for more than one road agent may be determined in parallel and used in determining the vehicle maneuver.

The technology herein may allow for a smoother and safer trip in an autonomous vehicle for a passenger. In particular, more forward progress in the autonomous vehicle may be made than without the navigation system described above. The technology may also minimize unnecessary overreactions and underreactions by the autonomous vehicle to smaller lateral gaps with which road agents and other road agents are comfortable while simultaneously maintaining required levels of safety and compliance.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A system for estimating a spacing profile for a road agent, the system comprising:
a first module that includes instructions (180) that cause one or more processors (120) to:
receive (402) data related to characteristics of the road agent and road agent behavior detected in an environment of an autonomous vehicle (100);
initiate (404) an analysis of the road agent behavior; and
estimate (406) the spacing profile of the road agent as part of the analysis, the spacing profile including a lateral gap preference, one or more predicted behaviors of the road agent related to changes in lateral gap and a predictability score for the road agent, which is based on how much behavior to-date has matched previously predicted behavior; and
a second module that includes instructions that cause the one or more processors to:
determine (408) one or more components of an autonomous vehicle maneuver based on the estimated spacing profile; and
send (410) control instructions for performing the autonomous vehicle maneuver.

2. The system of claim 1, wherein the initiation of the analysis is based on when the road agent is predicted to interact with the autonomous vehicle.

3. The system of claim 1 or claim 2, wherein the initiation of the analysis is based on a lateral gap requirement for the autonomous vehicle in relation to the road agent.

4. The system of any preceding claim, wherein the initiation of the analysis is based on whether the road agent is performing an overtake maneuver past the autonomous vehicle.

5. The system of any preceding claim, wherein the initiation of the analysis is based on an existing lateral gap between the autonomous vehicle and the road agent.

6. The system of any preceding claim, wherein the initiation of the analysis is based on a machine learning model.

7. The system of any preceding claim, wherein the one or more predicted behaviors of the road agent includes an overtake maneuver or a cut-off maneuver in relation to the autonomous vehicle.

8. The system of claim 1, wherein the spacing profile includes a predictability score for the autonomous vehicle.

9. The system of any preceding claim, further comprising a third module that includes instructions that causes the one or more processors to:
receive the control instructions; and
control an operational system of the autonomous vehicle based on the control instructions.

10. The system of claim 9, further comprising the operational system.

11. The system of claim 10, further comprising the autonomous vehicle.

12. A method for estimating a spacing profile for a road agent, the method comprising:
receiving, (402) by one or more computing devices, data related to characteristics of the road agent and road agent behavior detected in an environment of an autonomous vehicle (100);
initiating, (404)by the one or more computing devices, an analysis of the road agent behavior;
estimating, (406) by the one or more computing devices, the spacing profile of the road agent as part of the analysis, the spacing profile including a lateral gap preference and one or more predicted behaviors of the road agent related to changes in lateral gap and a predictability score for the road agent, which is based on how much behavior to-date has matched previously predicted behavior;
determining (408), by the one or more computing devices, one or more components of an autonomous vehicle maneuver based on the estimated spacing profile; and
sending, by the one or more computing devices (110), control instructions for performing the autonomous vehicle maneuver.

13. The method of claim 12, wherein the initiating of the analysis is based on: when the road agent is predicted to interact with the autonomous vehicle, and/or a lateral gap requirement for the autonomous vehicle in relation to the road agent, and/or whether the road agent is performing an overtake maneuver past the autonomous vehicle, and/or an existing lateral gap between the autonomous vehicle and the road agent, and/or a machine learning model.

14. The method of claim 12 or claim 13, wherein the one or more predicted behaviors of the road agent includes an overtake maneuver or a cut-off maneuver in relation to the autonomous vehicle, and/or wherein the spacing profile includes a predictability score for the road agent or the autonomous vehicle.

## Patentansprüche

1. System zum Schätzen eines Abstandsprofils für einen Straßenagenten, das System umfassend:
ein erstes Modul, das Anweisungen (180) beinhaltet, die einen oder mehrere Prozessoren (120) veranlassen zum:
Empfangen (402) von Daten betreffend Eigenschaften des Straßenagenten und des Verhaltens des Straßenagenten, die in einer Umgebung eines autonomen Fahrzeugs (100) erfasst werden;
Initiieren (404) einer Analyse des Verhaltens des Straßenagenten; und
Schätzen (406) des Abstandsprofils des Straßenagenten als Teil der Analyse, wobei das Abstandsprofil eine seitliche Abstandspräferenz, ein oder mehrere vorhergesagte Verhaltensweisen des Straßenagenten, die sich auf Änderungen des seitlichen Abstands beziehen, und einen Vorhersagewert für den Straßenagenten beinhaltet, der darauf basiert, wie sehr das bisherige Verhalten mit dem vorhergesagten Verhalten übereinstimmt; und ein zweites Modul, das Anweisungen beinhaltet, die den einen oder die mehreren Prozessoren veranlassen zum:
Bestimmen (408) einer oder mehrerer Komponenten eines autonomen Fahrzeugmanövers basierend auf dem geschätzten Abstandsprofil; und
Senden (410) von Steueranweisungen zum Durchführen des autonomen Fahrzeugmanövers.

2. System nach Anspruch 1, wobei die Initiierung der Analyse darauf basiert, wann vorhergesagt wird, dass der Straßenagent mit dem autonomen Fahrzeug interagiert.

3. System nach Anspruch 1 oder Anspruch 2, wobei die Initiierung der Analyse auf einer seitlichen Abstandsanforderung für das autonome Fahrzeug in Bezug auf den Straßenagenten basiert.

4. System nach einem der vorhergehenden Ansprüche, wobei die Initiierung der Analyse darauf basiert, ob der Straßenagent ein Überholmanöver mit dem autonomen Fahrzeug durchführt.

5. System nach einem der vorhergehenden Ansprüche, wobei die Initiierung der Analyse auf einem bestehenden seitlichen Abstand zwischen dem autonomen Fahrzeug und dem Straßenagenten basiert.

6. System nach einem der vorhergehenden Ansprüche, wobei die Initiierung der Analyse auf einem Maschinenlernmodell basiert.

7. System nach einem der vorhergehenden Ansprüche, wobei die eine oder die mehreren vorhergesagten Verhaltensweisen des Straßenagenten ein Überholmanöver oder Abbruchmanöver in Bezug auf das autonome Fahrzeug beinhalten.

8. System nach Anspruch 1, wobei das Abstandsprofil einen Vorhersagewert für das autonome Fahrzeug beinhaltet.

9. System nach einem der vorhergehenden Ansprüche, ferner umfassend ein drittes Modul, das Anweisungen beinhaltet, die den einen oder die mehreren Prozessoren veranlassen zum:
Empfangen der Steueranweisungen; und
Steuern eines Betriebssystems des autonomen Fahrzeugs basierend auf den Steueranweisungen.

10. System nach Anspruch 9, ferner umfassend das Betriebssystem.

11. System nach Anspruch 10, ferner umfassend das autonome Fahrzeug.

12. Verfahren zum Schätzen eines Abstandsprofils für einen Straßenagenten, das Verfahren umfassend:
Empfangen (402), durch das eine oder die mehreren Computergeräte, von Daten in Bezug auf die Eigenschaften des Straßenagenten und des Verhaltens des Straßenagenten, die in einer Umgebung eines autonomen Fahrzeugs (100) erfasst werden;
Initiieren (404), durch das eine oder die mehreren Computergeräte, einer Analyse des Straßenagentenverhaltens;
Schätzen (406), durch das eine oder die mehreren Computergeräte, des Abstandsprofils des Straßenagenten als Teil der Analyse, wobei das Abstandsprofil eine seitliche Abstandspräferenz und ein oder mehrere vorhergesagte Verhaltensweisen des Straßenagenten, die sich auf Änderungen des seitlichen Abstands beziehen, und einen Vorhersagewert für den Straßenagenten beinhaltet, der darauf basiert, wie sehr das bisherige Verhalten mit dem vorhergesagten Verhalten übereinstimmt;
Bestimmen (408), durch das eine oder die mehreren Computergeräte, einer oder mehrerer Komponenten eines autonomen Fahrzeugmanövers basierend auf dem geschätzten Abstandsprofil; und
Senden, durch das eine oder die mehreren Computergeräte (110), von Steueranweisungen zum Durchführen des autonomen Fahrzeugmanövers.

13. Verfahren nach Anspruch 12, wobei das Initiieren der Analyse basiert auf: wann vorhergesagt wird, dass der Straßenagent mit dem autonomen Fahrzeug interagiert, und/oder einer seitlichen Abstandsanforderung für das autonome Fahrzeug in Bezug auf den Straßenagenten, und/oder ob der Straßenagent ein Überholmanöver mit dem autonomen Fahrzeug durchführt, und/oder eines bestehenden seitlichen Abstands zwischen dem autonomen Fahrzeug und dem Straßenagenten, und/oder einem Maschinenlernmodell.

14. Verfahren nach Anspruch 12 oder Anspruch 13, wobei die eine oder die mehreren vorhergesagten Verhaltensweisen des Straßenagenten ein Überholmanöver oder ein Abbruchmanöver in Bezug auf das autonome Fahrzeug beinhaltet, und/oder wobei das Abstandsprofil einen Vorhersagewert für den Straßenagenten oder das autonome Fahrzeug beinhaltet.

## Revendications

1. Système d'estimation d'un profil d'espacement pour un agent routier, le système comprenant :
un premier module qui comporte des instructions (180) qui amènent un ou plusieurs processeurs (120) à :
recevoir (402) des données relatives à des caractéristiques de l'agent routier et à un comportement d'agent routier détecté dans un environnement d'un véhicule autonome (100) ;
lancer (404) une analyse du comportement d'agent routier ; et
estimer (406) le profil d'espacement de l'agent routier dans le cadre de l'analyse, le profil d'espacement comportant une préférence d'écart latéral, un ou plusieurs comportements prédits de l'agent routier relatifs à des changements de l'écart latéral et un score de prévisibilité pour l'agent routier, qui est basé sur le degré de concordance d'un comportement jusqu'à présent avec un comportement prédit précédemment ; et un deuxième module qui comporte des instructions qui amènent les un ou plusieurs processeurs à :
déterminer (408) une ou plusieurs composantes d'une manoeuvre de véhicule autonome sur la base du profil d'espacement estimé ; et
envoyer (410) des instructions de commande pour réaliser la manoeuvre de véhicule autonome.

2. Système selon la revendication 1, dans lequel le lancement de l'analyse est basé sur le moment auquel il est prédit que l'agent routier interagira avec le véhicule autonome.

3. Système selon la revendication 1 ou la revendication 2, dans lequel le lancement de l'analyse est basé sur une exigence d'écart latéral pour le véhicule autonome par rapport à l'agent routier.

4. Système selon l'une quelconque des revendications précédentes, dans lequel le lancement de l'analyse est basé sur le fait que l'agent routier réalise ou non une manoeuvre de dépassement au-delà du véhicule autonome.

5. Système selon l'une quelconque des revendications précédentes, dans lequel le lancement de l'analyse est basé sur l'existence d'un écart latéral entre le véhicule autonome et l'agent routier.

6. Système selon l'une quelconque des revendications précédentes, dans lequel le lancement de l'analyse est basé sur un modèle d'apprentissage automatique.

7. Système selon l'une quelconque des revendications précédentes, dans lequel les un ou plusieurs comportements prédits de l'agent routier comportent une manoeuvre de dépassement ou une manoeuvre de coupure par rapport au véhicule autonome.

8. Système selon la revendication 1, dans lequel le profil d'espacement comporte un score de prévisibilité pour le véhicule autonome.

9. Système selon l'une quelconque des revendications précédentes, comprenant en outre un troisième module qui comporte des instructions qui amènent les un ou plusieurs processeurs à :
recevoir les instructions de commande ; et
commander un système opérationnel du véhicule autonome sur la base des instructions de commande.

10. Système selon la revendication 9, comprenant en outre le système opérationnel.

11. Système selon la revendication 10, comprenant en outre le véhicule autonome.

12. Procédé d'estimation d'un profil d'espacement pour un agent routier, le procédé comprenant :
la réception, (402) par un ou plusieurs dispositifs informatiques, de données relatives à des caractéristiques de l'agent routier et à un comportement d'agent routier détecté dans un environnement d'un véhicule autonome (100) ;
le lancement, (404) par les un ou plusieurs dispositifs informatiques, d'une analyse du comportement d'agent routier ;
l'estimation, (406) par les un ou plusieurs dispositifs informatiques, du profil d'espacement de l'agent routier dans le cadre de l'analyse, le profil d'espacement comportant une préférence d'écart latéral et un ou plusieurs comportements prédits de l'agent routier relatifs à des changements d'écart latéral et un score de prévisibilité pour l'agent routier qui est basé sur le degré de concordance d'un comportement jusqu'à présent avec un comportement prédit précédemment ;
la détermination (408), par les un ou plusieurs dispositifs informatiques, d'un ou de plusieurs composants d'une manoeuvre de véhicule autonome sur la base du profil d'espacement estimé ; et
l'envoi, par les un ou plusieurs dispositifs informatiques (110), d'instructions de commande pour réaliser la manoeuvre de véhicule autonome.

13. Procédé selon la revendication 12, dans lequel le lancement de l'analyse est basé sur : le moment auquel il est prédit que l'agent routier interagira avec le véhicule autonome, et/ou une exigence d'écart latéral pour le véhicule autonome par rapport à l'agent routier, et/ou le fait que l'agent routier réalise ou non une manoeuvre de dépassement au-delà du véhicule autonome, et/ou l'existence d'un écart latéral entre le véhicule autonome et l'agent routier, et/ou un modèle d'apprentissage automatique.

14. Procédé selon la revendication 12 ou la revendication 13, dans lequel les un ou plusieurs comportements prédits de l'agent routier comportent une manoeuvre de dépassement ou une manoeuvre de coupure par rapport au véhicule autonome, et/ou dans lequel le profil d'espacement comporte un score de prévisibilité pour l'agent routier ou le véhicule autonome.
